Europäisches Patentamt

European Patent Office

Office européen des brevets

(19)

(11) Numéro de publication: **0 424 215 A1**

# DEMANDE DE BREVET EUROPEEN

(12)

(21) Numéro de dépôt: **90402822.2**

(22) Date de dépôt: **10.10.90**

(51) Int. Cl.5: **D04B 21/00, B29C 67/14**

(30) Priorité: **16.10.89 FR 8913476**

(43) Date de publication de la demande:
**24.04.91 Bulletin 91/17**

(84) Etats contractants désignés:
**AT BE CH DE DK ES FR GB GR IT LI LU NL SE**

(71) Demandeur: **Société Industrielle des Ets L.A. CHAIGNAUD-S.I.L.A.C.**
**Place Saint Florent**
**F-16110 La Rochefoucauld(FR)**

(72) Inventeur: **Loustalot, Jacques**
**12 avenue de Verdun**
**F-16110 La Rochefoucauld(FR)**
Inventeur: **Baudonnel, Jacques**
**Le Ménateau**
**F-16110 Yvrac et Malleyrand(FR)**

(74) Mandataire: **Loyer, Bertrand et al**
**Cabinet Pierre Loyer 77, rue Boissière**
**F-75116 Paris(FR)**

(54) Matériau composite, son procédé de réalisation et utilisation dudit matériau.

(57) Matériau composite d'épaisseur substantielle caractérisé en ce qu'il comporte une seule aramture de fils flexueux entrelacés, l'armature s'étendant dans les trois dimensions.

EP 0 424 215 A1

## MATERIAU COMPOSITE, SON PROCEDE DE REALISATION ET UTILISATION DUDIT MATERIAU

La présente invention concerne un matériau composite, son procédé de réalisation et utilisation dudit matériau.

Le matériau composite est une substance comportant généralement des fibres, des fils, libres ou assemblés en couches, noyés dans une résine.

Ces matériaux composites se présentent généralement sous forme de grandes plaques épaisses assez rigides. Elles sont de plus en plus utilisées dans l'industrie notamment dans l'industrie de construction de matériels de biens d'équipement, de transport, etc... pour réaliser des carosseries, des planchers, etc.

Ces plaques sont transformées, selon les techniques traditionnelles par moulage par contact ou sous vide, par injection et selon une technique plus récente par estampage.

Généralement un procédé de réalisation consiste à assembler en couches ou strates des étoffes textiles de fibres ou de fils de renfort à hautes caractéristiques mécaniques telles que : verre, silice, carbure de silicium, carbone, céramique, aramides, polyéthylène haut module, etc, et à les noyer dans une matrice de résine. Plus précisément on coule dans un moule de la dimension d'une plaque un fond de résine et d'agent de démoulage; par dessus on pose une première couche d'étoffe, en fils de fibres de renfort par exemple, que l'on recouvre de résine; par dessus on pose une seconde couche d'étoffe en fils de renfort à haute résistance, que l'on recouvre également de résine; ainsi de suite on "empile" plusieurs couches, par exemple cinq ou six que l'on recouvre de résine, et on achève l'empilage par une dernière couche de résine et un agent de démoulage. On fait ensuite subir à cet ensemble une action de compression destinée à éliminer le maximum d'air et à faire pénétrer la résine dans les couches d'étoffes, puis un traitement thermique qui réticule ou polymérise la résine afin d'obtenir un composite rigide et un ensemble le plus homogène possible. Ces matériaux composites peuvent comporter jusqu'à plus de quarante couches chacune d'une épaisseur de l'ordre de 0,1 à 0,2 millimètre; les plus courants comptent de une à quinze couches et sont d'épaisseur totale moyenne entre 3 et 5 millimètre après compression et prêts à l'emploi. Leur poids est de l'ordre de 200 grammes/m2 pour une couche de 0,1mm d'épaisseur en verre. Le matériau obtenu est un produit composite à haute résistance notamment aux chocs, à la traction, à la compression.

Cependant un tel procédé présente de nombreux inconvénients:

1- il est coûteux : le matériel nécessaire à sa mécanisation est très coûteux, et généralement les opérations sont manuelles, ce qui suppose une main-d'oeuvre importante; d'autre part il est long : les étapes de réalisation sont nombreuses;

2- le matériau obtenu présente une résistance moindre à la flexion et au cisaillement : on observe du délaminage. Le phénomène s'explique entre autre par le fait que les couches de tissus renferment des bulles d'air qui ne sont pas chassées par la résine. Ces bulles réduisent le contact couche-résine et provoquent des variations d'adhérence entre les couches, donc des points préférentiels de rupture.

3- l'homogénéité recherchée par le traitement thermique (imprégnation, polymérisation) est difficile à obtenir en une durée raisonnable, du fait de l'épaisseur du matériau ce qui accentue le délaminage.

La présente invention a pour objectif de réaliser un matériau composite selon un procédé qui résoud l'ensemble des difficultés exposées : mécanisation, rapidité de réalisation, résistance au délaminage, homogénéité, coûts.

L'invention a pour objet un matériau composite d'épaisseur substantielle caractérisé en ce qu'il comporte une seule aramture de fils flexueux entrelacés, s'étendant dans les trois dimensions.

L'invention porte également sur le procédé de réalisation de ce matériau, caractérisé en ce que l'armature tridimensionnelle est réalisé par tricotage sur métier à double fonture.

Dans une première variante de réalisation l'armature est réalisée par tricotage de fils de renfort préalablement associés à une résine thermoplastique.

Dans une seconde variante on tricote des fils à hautes caractéristiques mécaniques non associés à une résine, puis on imprègne le tricot obtenu de résine par immersion, injection, application au pinceau ou tout autre procédé connu.

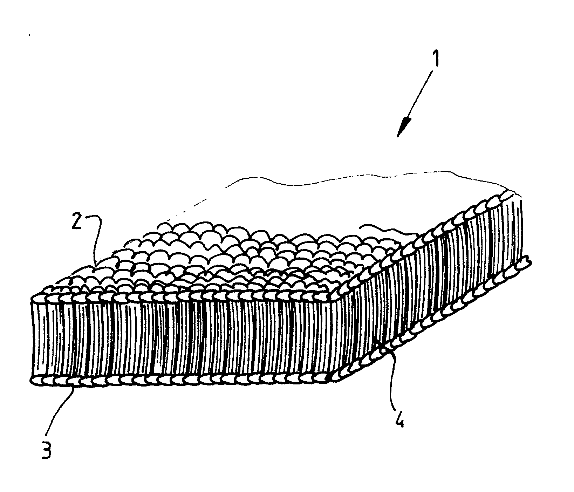

Afin de mieux comprendre l'invention on a illustré au dessin annexé un exemple de réalisation.

Un tricot est une structure textile formée d'un assemblage de mailles de fils et confectionné avec des aiguilles. Sur un métier les aiguilles sont arrangées ou disposées les unes par rapport aux autres sur un support appelé fonture. On réalise des tricots avec une fonture ou deux fontures. Selon la disposition et le nombre d'aiguilles utilisées on obtient des tricots plats, ou ronds. D'autre part, selon le choix de l'armure on obtient des mailles, c'est-à-dire des modes d'entrecroisement des fils, différents. Mais dans tous les cas de figure, la structure maillée réalisée présente une surface bidimensionnelle approximativement plane, d'épaisseur d'ordre de grandeur de celle du ou des fils utilisés.

Selon l'invention on s'est aperçu que le choix d'armures appropriées dans un métier à tricoter à double fonture permet d'obtenir un réseau de fils entrelacés s'étendant substantiellement dans les trois dimensions.

Il est possible de réaliser par exemple, en une seule phase de tricotage, un tissu en trois dimensions présentant une structure de type en nids d'abeille. C'est ce qu'illustre le dessin annexé. Le tricot 1 est constitué de deux réseaux 2,3 de mailles approximativement coplanaires reliés par une multitude de fils 4 approximativement parallèles entre eux et perpendiculaires auxdits réseaux 2,3. Sa structure est comparée à une structure en nids d'abeilles en ce que l'ensemble des fils de liaison est comparable aux parois des alvéoles hexagonales d'une telle structure.

On réalise alors le matériau composite en utilisant des fils associés à une résine thermoplastique, c'est-à-dire comportant des fibres de renfort et leurs matrices ou résines. Ces fils sont, de manière connue, obtenus soit par mélange intime de fibres de renfort et de fibres de résine, soit par enrobage d'un fil de renfort dans une gaine de résine.

Le tricotage de tels fils dans le métier à double fonture selon l'invention donne une feuille épaisse déformable, souple, et d'une homogénéité parfaite et présentant une résistance isotrope qui peut ensuite être enroulée, découpée et traitée thermiquement.

Le traitement thermique fait fondre la résine, qui lie la structure de renfort maillée, permet de donner au matériau la forme désirée, tout en conservant son épaisseur. Après ce traitement thermique, le refroidissement fige la forme de la structure maillée qui devient rigide et très résistante, pour un poids inférieur à toutes structures de substitution.

Dans l'exemple on obtient un tricot composite dont le poids, pour une épaisseur de l'ordre de 5mm peut être 2 fois moindre que celui d'un matériau multicouche traditionnel de même épaisseur.

En outre selon l'invention le tricotage est un tricot à mailles jetées, du type technique Rachel ou du type chaîne, et dans tous les cas avec double fonture.

A titre d'exemple on a réalisé un matériau selon l'invention avec des fils de fibres composites comportant 60% verre, 40% PEEK sur un métier Rachel 5 DPLH, jauge 10E avec les jeux d'armures suivants :

1°) 20/00/24/44
2°) 20/24/20/24
3°) 44/20/00/24

Dans une variante de réalisation on réalise le matériau composite en utilisant des fils de renfort non associés de résine. Le tricotage s'effectue donc avec un matériau à l'état brut exempt de résine. On obtient, en sortie, du métier un tissu tridimensionnel très souple, mais très fragile que l'on imprègne ensuite de résine. Après imprégnation le matériau se présente sous la forme d'une feuille épaisse, parfaitement homogène, qui peut ensuite être découpée ou manipulée avant un traitement thermique ultérieur.

L'avantage considérable du matériau selon l'invention est qu'il est d'une parfaite homogénéité, dans son épaisseur il n'y a pas de discontinuité de matière, et le matériau est réalisé en une seule opération. Il présente une bonne résistance dans les trois dimensions : le coeffecient d'isotropie de la résistance est satisfaisant c'est-à-dire à peu près constant quelle que soit la direction de l'effort. Il peut être utilisé comme plaque de renfort plan dans les blindages, les planchers, etc, mais aussi de par sa grande déformabilité dans le plan, dans des pièces ou formes de renfort obtenues par estampage (coques de bateau, d'avion,...).

En outre, à volume identique, le matériau selon l'invention est au moins de 20% plus léger que les matériaux traditionnels constitué de couches superposées et généralement de l'ordre de 2 à 3 fois plus léger. Cette légèreté en fait un matériau particulièrement intéressant en aéronautique (fuselage, planchers) où les réductions de poids sont un important facteur d'économies.

## Revendications

1. Procédé de fabrication d'un matériau composite d'épaisseur substantielle comportant une armature réalisée à partir de fils de fibre entrelacés par tricotage et s'étendant dans les trois dimensions, caractérisé en ce qu'il consiste à réaliser l'armature en une seule phase de tricotage de fils de fibre associés à une résine.

2. Procédé selon la revendication 1 caractérisé en ce que la résine est associée aux fils par un mélange intime de fibres de renfort et de fibres de résine.

3. Procédé selon la revendication 1 caractérisé en ce que chaque fil de fibre est enrobé dans une gaine de résine.

4. Procédé selon la revendication 1 caractérisé en ce que les fils de fibre sont imprégnés de résine.

5. Procédé de réalisation selon l'une quelconque des revendications précédentes, caractérisé en ce que le tricotage est effectué dans un métier à double fonture.

6. Procédé selon l'une quelconque des revendications précédentes, caractérisé en ce que le tricotage est à mailles jetées, du type Rachel ou du type chaîne.

7. Procédé selon l'une quelconque des revendications précédentes, caractérisé en ce que le tricotage présente une structure en nid d'abeilles.

8. Procédé de fabrication d'un élément de surface en matériau composite selon l'une quelconque des revendications précédentes, caractérisé en ce qu'il comporte les phases consistant à:

- traiter thermiquement le matériau pour ramollir la résine;
- donner au matériau une forme désirée;
- refroidir le matériau pour figer la forme de la structure maillée.

9. Matériau composite d'épaisseur substantielle obtenu par le procédé selon l'une quelconque des revendications précédentes.

10. Utilisation du matériau selon la revendication 8 pour la production de matériels de biens d'équipement, notamment des carrosseries.

**Office européen des brevets**

# RAPPORT DE RECHERCHE EUROPEENNE

Numéro de la demande

**EP 90 40 2822**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y,A | DE-A-3 139 402 (HOECHST AG) <br> * page 3, lignes 11 - 31; revendications 1, 6; figure 1 * <br> — — — | 1,5,6,9 | D 04 <br> B 21/00 <br> B 29 C 67/14 |
| Y,A | EP-A-0 310 200 (STAMICARBON B.V.) <br> * colonne 1, lignes 27 - 54; revendication 11 * <br> — — — | 1,2,8,9 | |
| A | EP-A-0 156 600 (CELANESE CORPORATION) <br> * revendications 1, 4, 5, 17 * <br> — — — | 1,2 | |
| A | FR-A-2 446 336 (L. PAYEN ET CIE) <br> * revendication 3 * <br> — — — | 1,3 | |
| A | EP-A-0 243 105 (COURTAULDS PLC) <br> — — — | | |
| A | DE-B-2 904 203 (KARL MAYER TEXTIL-MASCHINEN-FABRIK GMBH) <br> — — — — — | | |

**DOMAINES TECHNIQUES RECHERCHES (Int. Cl.5)**

D 04 B
B 29 C

Le présent rapport de recherche a été établi pour toutes les revendications

| Lieu de la recherche | Date d'achèvement de la recherche | Examinateur |
|---|---|---|
| La Haye | 22 janvier 91 | VAN GELDER P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant